# EUROPÄISCHE PATENTSCHRIFT

(11) **EP 1 621 403 B1**
(45) Veröffentlichungstag und Bekanntmachung des Hinweises auf die Patenterteilung: **15.10.2008**
(21) Anmeldenummer: 05104651.4
(22) Anmeldetag: 31.05.2005
(51) Int. Cl.: B60Q 1/52, B62D 1/00, B60K 35/00

(54) **Nachtsichtgerät**
Night vision device
Dispositif de vision de nuit

(30) Priorität: 28.07.2004 DE 102004036566
(43) Veröffentlichungstag der Anmeldung: 01.02.2006
(73) Patentinhaber: Robert Bosch GmbH, 70442 Stuttgart (DE)
(72) Erfinder: Haug, Karsten, 70372, Stuttgart (DE)

(56) Entgegenhaltungen:
- EP-A- 0 686 865
- EP-A- 1 327 969
- EP-A- 1 407 931
- WO-A-03/005102
- DE-A1- 19 940 723
- US-A1- 2002 167 589

## Beschreibung

Die Erfindung betrifft ein Nachtsichtgerät für Kraftfahrzeuge mit mindestens einer Nachtsicht-Kamera, einer Steuereinheit und einer Anzeigeeinheit zur Darstellung eines Nachtsichtbildes.

Nachtsichtgeräte für Kraftfahrzeuge sind hinreichend, beispielsweise aus der WO 02/36389 A1 bekannt. Sie haben Nachtsicht-Kameras, die beispielsweise auf der Basis von nahem Infrarot mit aktiver Beleuchtung (NIR) oder auf Basis von Wärmestrahlung (FIR) ein Bild der Fahrzeugumgebung mit einer Sichtweite aufnehmen, die in der Regel die Sichtweite des menschlichen Auges übersteigt. Das Bild der Fahrzeugumgebung wird dem Fahrer über eine Anzeigeeinheit dargestellt. Die Anzeigeeinheit kann ein herkömmliches Display in einem Armaturenbrett oder ein Head-Up-Display sein, das mit einem Projektor das Bild auf die Windschutzscheibe projiziert. Head-Up Projektoren sind beispielsweise aus der DE 101 31 720 A1 bekannt.

Das Fahren nach Display anhand des reinen Nachtsichtbildes ist relativ schwierig, da anhand des angezeigten Nachtsichtbildes Relativpositionen in der Fahrspur nur schwer einschätzbar sind. Selbst auf sehr gut ausgebauten Straßen, wie Autobahnen oder Landstraßen, mit sehr guten Fahrbahnmarkierungen und großen Krümmungsradien ist das Fahren nach Anzeige des Nachtsichtbildes nur schwer möglich. Zudem ist der Abstand zu anderen Objekten, insbesondere vorausfahrenden Fahrzeugen, nur sehr schwer einschätzbar. Das Einhalten eines geeigneten Sicherheitsabstandes ist selbst bei großer Übung des Fahrens nach angezeigtem Nachtsichtbild nur schwer möglich, da das Nachtsichtbild häufig mit einem anderen Öffnungswinkel aufgenommen wurde, als das durch die Windschutzscheibe vom menschlichen Auge wahrgenommene Bild.

Aus der US 2002/0167589 A1 ist ein Rücksicht-System bekannt, bei dem mit einer Kamera ein Bereich hinter dem Fahrzeug aufgenommen und in einer Anzeige dargestellt wird. In einer Ausführungsform ist für den Fall einer schlechten Sicht eine Infrarot-Beleuchtungseinheit vorgesehen. Über eine entsprechende Shutter-Einheit kann die Kamera für Infrarot lichtempfindlich geschaltet werden. In einer weiteren Ausführungsform kann ein zusätzliches Auswertegerät vorhanden sein, so dass ein Spurverlassen registriert wird, um eine Müdigkeit des Fahrers ermitteln zu können.

Aus der DE 199 40 723 A1 ist ein Verfahren zur Anzeige eines perspektivischen Bildes und eine Anzeigevorrichtung für mindestens einen Insassen eines Fahrzeugs bekannt, bei dem ein Bildelement in Abhängigkeit vom vorausliegenden Fahrweg, von mindestens einem Betriebsparameter des Fahrzeugs und/oder von mindestens einem Parameter eines im Bereich des Fahrwegs identifizierten Objekts in mindestens einer Größe verändert wird. Auf einer Abstands-Skala wird hierzu ein Spotlight für die die Geschwindigkeit des eigenen Fahrzeugs entsprechend der Fahrgeschwindigkeit verschoben.

Aufgabe der Erfindung ist es, ein verbessertes Nachtsichtgerät zu schaffen, mit dem das Führen eines Kraftfahrzeuges während der Beobachtung des angezeigten Nachtsichtbildes erleichtert wird.

Die Aufgabe wird mit dem gattungsgemäßen Nachtsichtgerät erfindungsgemäß dadurch gelöst, dass die Steuereinheit zur Ermittlung und Anzeige von Hilfsmarkierungen zur Längs- und/oder Querführung beim Fahren des Kraftfahrzeuges ausgebildet ist.

Durch die eingeblendeten oder an der Anzeigeeinheit fest angebrachten Hilfsmarkierungen kann auf einfache Weise eine erhebliche Hilfestellung bei der Längs- und/oder Querführung des Kraftfahrzeuges bereitgestellt werden. Die Hilfsmarkierungen sind vorzugsweise Hilfslinien.

Zur Querführung werden erfindungsgemäß mindestens eine Hilfsmarkierung zur Darstellung der Spurgrenzen einer Fahrspur und vorzugsweise mindestens eine Hilfsmarkierung zur Darstellung der Fahrzeugmitte oder der Fahrzeugbreite ermittelt und auf dem Nachtsichtbild dargestellt. Die mindestens eine Hilfsmarkierung zur Darstellung der Fahrzeugmitte oder Fahrzeugbreite kann entweder aktuell berechnet oder fest vorgegeben, d. h. nur einmalig ermittelt sein, da Kamerakoordinaten feste Relationen zu den Fahrzeugkoordinaten haben.

Die Hilfsmarkierung zur Darstellung der Spurmitte oder der Spurgrenzen einer Fahrspur kann auf einfache Weise aus dem Nachtsichtbild mit Hilfe bekannter Bildanalyseverfahren bestimmt werden. Der Fahrer braucht dann nach den Hilfsmarkierungen das Fahrzeug lediglich so zu führen, dass die Hilfsmarkierungen von Spurmitte und Fahrzeugmitte oder die Hilfsmarkierungen für die Fahrzeugposition und die Spurmarkierungen symmetrisch liegend zur Deckung gebracht werden.

Die Ermittlung der mindestens einen Hilfsmarkierung erfolgt vorzugsweise in Abhängigkeit des Winkels und des seitlichen Versatzes zwischen der Sensorachse des Nachtsicht-Bildsensors und der Längsachse des Kraftfahrzeuges. Dieser Winkel und dieser Versatz bestimmt nämlich die Perspektive des Nachtsichtbildes und die Position relativ zur Fahrzeugmitte oder den Fahrzeuggrenzen.

Besonders vorteilhaft ist es, wenn die Steuereinheit zur Berechnung der aktuellen Position des Fahrzeugs in einer Fahrspur aus dem Nachtsichtbild und zum Vergleichen mit einer Sollposition zur Ermittlung und Anzeige eines Korrekturvektor ausgebildet ist. Der Korrekturvektor impliziert bereits einen ansonsten vom Fahrer durchzuführenden Vergleich zwischen Ist- und Sollposition und ist vom Fahrer sehr einfach zu erfassen.

Zur Längsführung ist es vorteilhaft, wenn in vertikaler Richtung des Displays Abstandshilfslinien mit fest vorgegebenen Entfernungen vom Kraftfahrzeug in Fahrtrichtung nach vorne statisch dargestellt werden. Dies kann beispielsweise durch fest angebrachte Markierungen an der Anzeigeeinheit oder durch statische Einblendung der Abstandshilfslinien überlagert zum Nachtsichtbild erfolgen.

Besonders vorteilhaft ist es jedoch, wenn die Steuereinheit zur Ermittlung und Darstellung eines Sollabstands zu einem vorausfahrenden Fahrzeug in Abhängigkeit von der Eigengeschwindigkeit ausgebildet ist.

Die Steuereinheit kann zudem noch mit Umfeldsensoren zur Ermittlung von Parametern der Wettersituation und/oder des Straßenzustandes verbunden und zur Ermittlung des Sollabstands in Abhängigkeit der ermittelten Parameter ausgebildet sein.

Auf diese Weise kann ein aktueller Sollabstand unter Berücksichtigung der relevanten Fahrsituation ermittelt und angezeigt werden.

Weiterhin ist es vorteilhaft, wenn die Steuereinheit mit einem Navigationsgerät verbunden und zur Ermittlung der Hilfsmarkierungen in Abhängigkeit von Parametern ausgebildet ist, die von dem Navigationsgerät bereitgestellt werden. Solche Parameter können beispielsweise der Straßenverlauf sein, so dass der Sollabstand bei kursiver Strecke vergrößert wird.

Die Steuereinheit kann vorzugsweise mit einem Antikollisionsgerät verbunden sein, wobei mindestens ein vom Antikollisionsgerät ein dreidimensionalen Relativkoordinaten bereitgestelltes Kollisionsobjekt in das zweidimensionale Nachtsichtbild projiziert wird.

Die Kombination mit einem Antikollisionsgerät hat den Vorteil, dass der Fahrer nachvollziehen kann, wie die Längsregelung des Antikollisionsgerätes durch Bremsen oder Beschleunigen des Kraftfahrzeuges die Ist-Postition in Richtung der Soll-Position korrigiert.

In entsprechender Weise kann auch ein Kombination des Nachtsichtgerätes mit einem Spurhaltegerät vorgesehen sein, das vorzugsweise auf denselben Bildinformationen des Bildsensors und demselben Spurerkennungsalgorithmus basiert, wie er für das Nachtsichtgerät genutzt wird. Dem Fahrer werden damit die Qualität der Spurerkennung, als auch der Querregelvorgang visuell dargestellt.

Die Erfindung wird nachfolgend anhand der beigefügten Zeichnungen beispielhaft näher erläutert. Es zeigen:
Figur 1 - Blockdiagramm eines Nachtsichtgerätes für Kraftfahrzeuge;
Figur 2 - Skizze eines Nachtsichtbildes mit eingeblendeten Hilfsmarkierungen;
Figur 3 -Skizze eines Nachtsichtbildes mit eingeblendeten Hilfslinien zur Querführung;
Figur 4 - Skizze eines Nachtsichtbildes mit eingeblendeten horizontalen Hilfslinien zur Abstandsdarstellung.
Figur 5 -Skizze eines Nachtsichtbildes mit eingeblendetem Kartenausschnitt, der von einem Navigationsgerät zur Darstellung des weiteren Straßenverlaufs bereit gestellt wird.

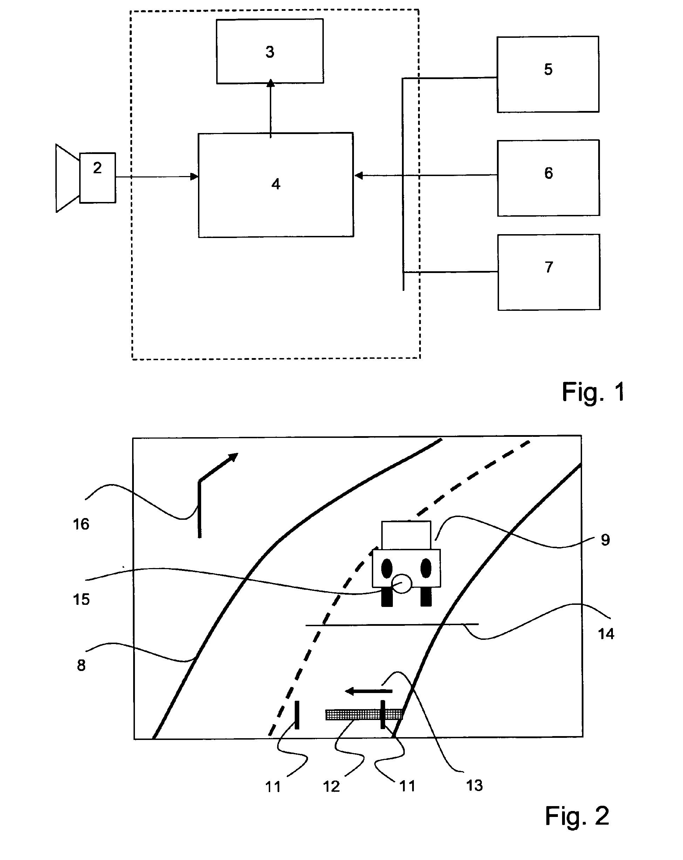

Die Figur 1 lässt ein Blockdiagramm eines Nachtsichtgerätes 1 erkennen, dass im Wesentlichen eine Nachtsicht-Kamera 2, eine Anzeigeeinheit 3 für ein Nachtsichtbild, sowie eine Steuereinheit 4 hat. Die Nachtsicht-Kamera kann beispielsweise auf Basis von nahem Infrarot mit aktiver Beleuchtung (NIR) oder auf Basis von Wärmestrahlung (FIR) arbeiten. Die Steuerungseinheit 4 ist vorzugsweise programmierbar und hat einen Mikroprozessor und/oder einen FPGA (Field Progammable Gate Array) bzw. ASIC (Application Specific Integrated Cirquit).

Die Anzeigeeinheit 3 kann ein herkömmliches Display oder ein Head-Up-Projektor o. ä. sein.

Das Führen eines Kraftfahrzeuges nach dem in der Anzeigeeinheit 3 dargestellten Nachtsichtbildes ist problematisch, da die Relativposition des Kraftfahrzeugs in der Fahrspur sowie der Abstand zu anderen Objekten nur schwer einschätzbar sind. Dies liegt daran, dass das Nachtsichtgerät 1 oft mit einem anderen Öffnungswinkel und/oder anderen Aufnahmepositionen aufgenommen wurde, als das vom Fahrer durch die Windschutzscheibe erfasste tatsächliche Bild der Umgebung und aufgrund von kleinen horizontalen Öffnungswinkeln peripheres Sehen ungenügend ist. Die Nachtsichtbilder werden zudem unter Umständen noch vergrößert oder verkleinert.

Um nun die Führung eines Kraftfahrzeuges auf der Basis des dargestellten Nachtsichtbildes zu verbessern, ist die Steuereinheit 4 beispielweise durch geeignete Programmierung zur Ermittlung und Anzeige von Hilfsmarkierungen, insbesondere von Hilfslinien, zur Längs- und/oder Querführung ausgebildet. Dem Fahrer wird es damit ermöglicht, das Kraftfahrzeug in Abhängigkeit von den Hilfslinien zu führen, beispielsweise durch Korrektur der Fahrzeugposition nach rechts und links durch Lenkradeinschlag und durch Bremsen oder Beschleunigen zur Abstandsanpassung.

Optional ist die Steuereinheit 4 mit einem Navigationsgerät 5 verbunden, um zusätzliche Parameter, wie beispielsweise den weiteren Straßenverlauf, an das Nachtsichtgerät 1 zur Auswertung und Anzeige weiterzuleiten.

Weiterhin kann die Steuereinheit 4 optional mit einem Antikollisionsgerät 6 verbunden sein, insbesondere um vom Antikollisionsgerät 6 in dreidimensionalen Relativkoordinaten bereitgestellten Kollisionsobjekte an das Nachtsichtgerät 1 zur Auswertung und Anzeige zu übergeben.

Optional kann die Steuereinheit 4 weiterhin mit einem Spurhaltegerät 7 verbunden sein, um Querregelungsparameter und Spurinformation des Spurhaltegerätes 7 an das Nachtsichtgerät 1 zur Auswertung und Darstellung weiterzuleiten.

Die Steuereinheit 4 kann weiterhin zur Auswertung weiterer Parameter ausgebildet sein, die von Umfeldsensoren entweder über die genannten Navigationsgeräte 5, Antikollisionsgeräte 6 oder Spurhaltegeräte 7 oder separat bereitgestellt werden. Diese Parameter werden dann angezeigt und gegebenenfalls zur Ermittlung der Hifsmarkierungen zur Längs- und/oder Querführung des Kraftfahrzeugs genutzt.

Die Figur 2 lässt eine Skizze eines beispielhaften Nachtsichtbildes mit mehreren Hilfsmarkierungen erkennen. Das Nachtsichtbild zeigt einen gekrümmten Straßenverlauf 8, mindestens ein vorausfahrendes Fahrzeug 9.

Zur Querführung werden von der Steuereinheit 4 Hilfsmarkierungen 11 zur Darstellung der Spurmitte oder der Spurgrenzen der Fahrspur (Soll-Querposition) sowie eine balkenförmige Hilfsmarkierung 12 zur Darstellung der Fahrzeug-IST-Querposition bzw. der Fahrzeugmitte oder Fahrzeugbreite dargestellt. Ein pfeilförmiger Korrekturvektor 13 oberhalb dieser Hilfsmarkierung 11, 12 zeigt an, dass eine Korrektur der Fahrzeugposition nach links erforderlich ist.

Weiterhin ist eine horizontale Hilfslinie 14 eingeblendet, die den Mindest-Sicherheitsabstand zu dem vorausfahrenden Fahrzeug 9 deutlich macht. Diese Hilfslinie 14 wird von der Steuereinheit 4 in Abhängigkeit von der Eigengeschwindkeit des Kraftfahrzeuges und gegebenenfalls weiterer Parameter, wie Wettersituation, Sichtweite etc. bestimmt.

Der tatsächliche Abstand des Kraftfahrzeuges zu einem vorausfahrenden Objekt wird durch eine Punktmarkierung 15 verdeutlicht, die durch Projektion aus der 3D-Ojektposition vom Anti-Kollisionsgerät berechnet wurde. Weiterhin ist eine Pfeilmarkierung 16, beispielsweise ein abgeknickter Pfeil, zur Darstellung des weiteren Straßenverlaufs vorgesehen. Diese Pfeilmarkierung 16 kann aus dem Nachtsichtbild bestimmt werden. Vorzugsweise wird die Pfeilmarkierung jedoch auf der Basis von Straßenverlaufsinformationen berechnet, die von einem Navigationsgerät 5 bereitgestellt werden, da so auch Spurverläufe bereitgestellt werden können, wenn die Sicht des Nachtsichtgerätes beschränkt ist (z. B. vor Kuppen), oder die die Sichtweite des Nachtsichtgerätes übersteigen.

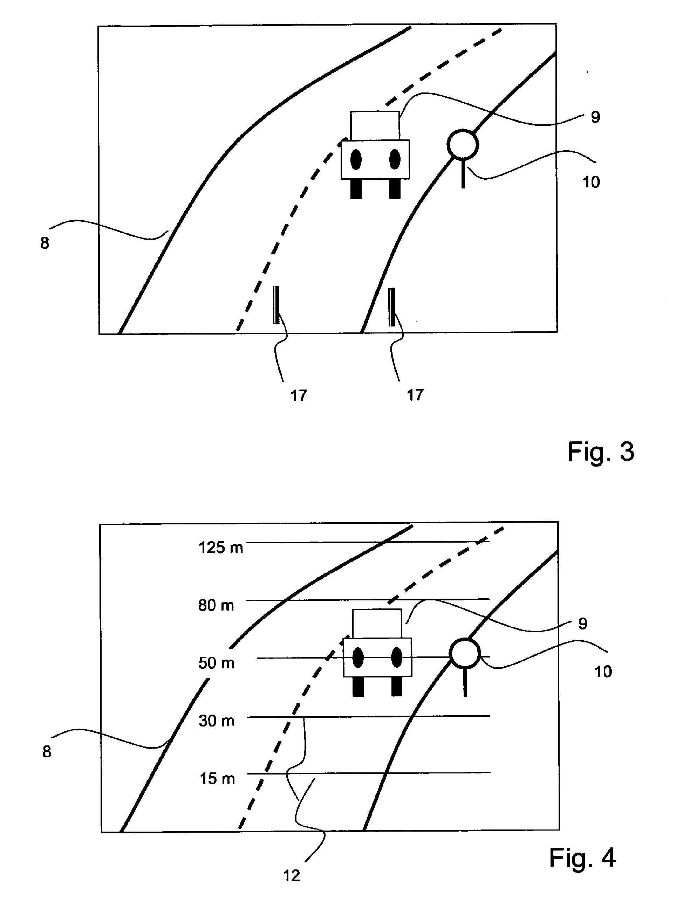

Die Figur 3 lässt das beispielhafte Nachtsichtbild aus der Figur 2 mit vereinfachten Hilfsmarkierungen 17 zur Querführung erkennen. Die Hilfsmarkierungen 17 sind zwei ortsfest in der Anzeigeeinheit 3 eingeblendete oder an der Anzeigeeinheit 3 angebrachte Marken, die dem Fahrer bei der Querführung helfen. Beim Führen des Kraftfahrzeuges müssen diese ortsfesten statischen Hilfsmarkierungen 17 in Deckung oder symmetrisch zu den im Nachtsichtbild erkennbaren Randmarkierungen der Fahrbahn gebracht werden. Der Abstand der Hilfsmarkierungen 17 ist so gewählt, dass er der durchschnittlichen Spurbreite entspricht. Diese kann auf Basis des Navigationsgerätes angepasst werden (z. B. auf typischen Straßenarten: Autobahn, Landstraße, Stadt). Die Position der Hilfsmarkierung 17 ist so gewählt, dass sich das Fahrzeug genau in der Spurmitte befmdet, wenn die Hilfsmarkierungen 17 mit den Markierungen einer üblichen Fahrspur 8 übereinstimmen bzw. symmetrisch zwischen diesen oder symmetrisch um diese liegen. Die Position der Hilfsmarkierungen 17 bestimmen sich aus Relativpositionen und Relativachse von der Nachtsicht-Kamera 2, Fahrzeug und der Spurbreite.

Es ist aus der Figur 3 erkennbar, dass sich das Fahrzeug eindeutig zu weit rechts befindet. Der Fahrer kann nun aufgrund der Information im Nachtsichtbild die Querrichtung des Fahrzeugs durch Lenken entsprechend korrigieren. Dies gilt auch, wenn die Spurbreite der Fahrspur 8 schwankt. Dann erfolgt eine Korrektur der Fahrzeugposition derart, dass die Hilfsmarkierungen 17 links und rechts gleich weit von den Spurmarkierungen entfernt sind, bzw. symmetrisch zwischen diesen oder symmetrisch um diese liegen. Die Position der Hilfsmarkierungen 17 bestimmen sich aus Relativposition und Relativachse von Kamera und Fahrzeug.

Die Berechnung der Hifsmarkierung 17 basiert auf der festen Zuordnung zwischen der Aufnahmeachse der Nachtsicht-Kamera 2 und der Längsachse des Kraftfahrzeuges, so dass die Positionen der Hilfsmarkierungen 17 nur einmal bei der Kalibierung der Nachtsicht-Kamera 2 zum Kraftfahrzeug ermittelt werden muss.

Die Figur 4 lässt das beispielhafte Nachtsichtbild aus der Figur 2 mit Hilfsmarkierungen 18 zur Längsführung erkennen. Die Hilfsmarkierungen 18 sind statische Abstandshilfslinien zur Fahrzeuglängsführung, die in das Nachtsichtbild mit Ihrer Entfernung zum eigenen Kraftfahrzeug eingeblendet oder fest an der Anzeigeeinheit 3 angebracht sind. Mit Hilfe dieser Abstands-Hilfslinien 18 kann der Fahrer dann selbst zum Beispiel nach der Regel "Abstand gleich halber Tacho" den Abstand zur vorfahrenden Fahrzeugen selbst regeln.

Die Berechnung der Position der Abstands-Hilfslinien 18 auf der Anzeigeeinheit 3 erfolgt an Hand einfacher Projektion unter der Annahme einer ebenen Fahrbahn ohne vertikale Krümmung.

Die Krümmung der Fahrbahn kann beispielsweise durch Informationen von dem Navigationsgerät 5 oder anderen dreidimensionalen Informationen, wie zum Beispiel einer Stereo-Kamera berücksichtigt werden.

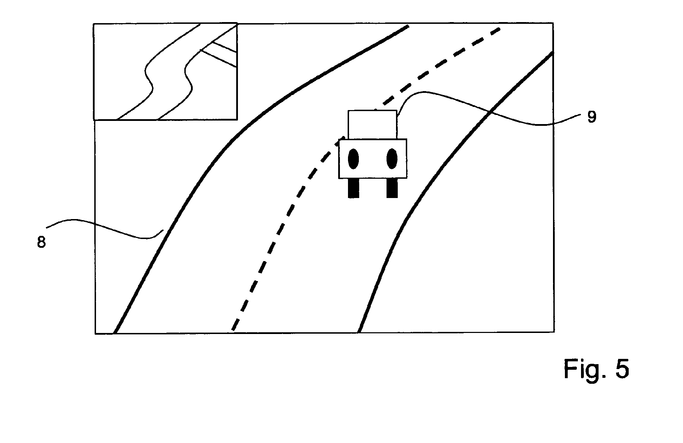

Die Figur 5 zeigt eine Skizze eines beispielhaften Nachtsichtbildes mit links oben eingeblendetem Kartenausschnitt. Die Daten des Kartenausschnitts werden von einem Navigationsgerät bereitgestellt, das an das Nachtsichtgerät 1 anschließbar ist. Mit Hilfe des Kartenausschnitts wird dem Fahrer der weitere insbesondere über die Sichtweite des Navigationsgerätes 1 hinausgehende Straßenverlauf angezeigt.

## Patentansprüche

1. Nachtsichtgerät (1) für Kraftfahrzeuge mit mindestens einer Nachtsicht-Kamera (2), einer Steuereinheit (4) und einer Anzeigeeinheit (3) zur Darstellung eines Nachtsichtbildes, wobei die Steuereinheit zur Ermittlung und Anzeige von Hilfsmarkierungen (11 bis 18) zur Längs- und/oder Querführung beim Fahren des Kraftfahrzeuges ausgebildet ist, **dadurch gekennzeichnet, dass** das Nachtsichtgerät derart ausgestaltet ist, dass zur Querführung mindestens eine Hilfsmarkierung (11) zur Darstellung von Spurgrenzen einer Fahrspur auf dem Nachtsichtbild ermittelt und zusätzlich zu den in dem Nachtsichtbild erkennbaren Randmarkierungen der Fahrbahn dargestellt wird.

2. Nachtsichtgerät (1) nach Anspruch 1, **dadurch gekennzeichnet, dass** zur Querführung weiterhin mindestens eine Hilfsmarkierung (12, 17) zur Darstellung der Fahrzeugmitte oder der Fahrzeugbreite auf dem Nachtsichtbild ermittelt und dargestellt wird.

3. Nachtsichtgerät (1) nach einem der vorhergehenden Ansprüche,
**dadurch gekennzeichnet, dass** die Ermittlung der mindestens einen Hilfsmarkierung (11, 12,17) aus dem Winkel und dem letzten Versatz zwischen der Sensorachse des Nachsicht-Kamera (2) und der Längsachse des Kraftfahrzeuges erfolgt.

4. Nachtsichtgerät (1) nach einem der vorhergehenden Ansprüche,
**dadurch gekennzeichnet, dass** die Steuereinheit (4) zum Berechnen der aktuellen Position des Fahrzeugs auf einer Fahrspur aus dem Nachtsichtbild und Vergleichen mit einer Sollposition zur Ermittlung und Anzeige eines Korrekturvektors (13) ausgebildet ist.

5. Nachtsichtgerät (1) nach einem der vorhergehenden Ansprüche,
**dadurch gekennzeichnet, dass** die Anzeigeeinheit (3) zur statischen Darstellung vertikaler Abstandshilfslinien (14, 18) mit fest vorgegebenen Entfernungen vom Kraftfahrzeug in Fahrtrichtung nach vorne ausgebildet ist.

6. Nachtsichtgerät (1) nach einem der vorhergehenden Ansprüche,
**dadurch gekennzeichnet, dass** die Steuereinheit (4) zur Ermittlung und Darstellung eines Sollabstands zu einem vorausfahrenden Fahrzeug in Abhängigkeit von der Eigengeschwindigkeit ausgebildet ist.

7. Nachtsichtgerät (1) nach Anspruch 6, **dadurch gekennzeichnet, dass** die Steuereinheit (4) mit Umfeldsensoren zur Ermittlung von Parametern der Wettersituation und/oder des Straßenzustands verbunden und zur Ermittlung des Sollabstands in Abhängigkeit der ermittelten Parameter ausgebildet ist.

8. Nachtsichtgerät (1) nach einem der vorhergehenden Ansprüche,
**dadurch gekennzeichnet, dass** die Steuereinheit (4) mit einem Navigationsgerät (5) verbunden und zur Ermittlung der Hilfsmarkierungen (11 bis 18) in Abhängigkeit von Parametern, die von dem Navigationsgerät (5) bereitgestellt werden, ausgebildet ist.

9. Nachtsichtgerät (1) nach einem der vorhergehenden Ansprüche,
**dadurch gekennzeichnet, dass** die Steuereinheit (4) mit einem Antikollisionsgerät (6) verbunden ist und zur Projektion mindestens eines vom Antikollisionsgerät (6) in dreidimensionalen Relativkoordinaten bereitgestellten Kollisionsobjektes in das zweidimensionale Nachtsichtbild ausgebildet ist.

10. Nachtsichtgerät (1) nach einem der vorhergehenden Ansprüche,
**dadurch gekennzeichnet, dass** die Steuereinheit (4) mit einem Spurhaltegerät (7) verbunden ist.

11. Nachtsichtgerät (1) nach einem der vorhergehenden Ansprüche,
**dadurch gekennzeichnet, dass** die Steuereinheit (4) mit einem Navigationsgerät (5) verbunden und zur Einblendung eines vom Navigationsgerät (5) bereitgestellten weiteren Straßenverlaufs ausgebildet ist.

## Claims

1. Night vision device (1) for motor vehicles having at least one night vision camera (2), a control unit (4) and a display unit (3) for displaying a night vision image, wherein the control unit is designed to determine and display auxiliary marks (11 to 18) for guiding the motor vehicle longitudinally and/or transversely as it drives, **characterized in that** the night vision device is configured in such a way that, for the purpose of providing lateral guidance, at least one auxiliary mark (11) for indicating lane boundaries of a traffic lane is determined on the night vision image and displayed in addition to the edge marks of the carriageway which can be identified in the night vision image.

2. Night vision device (1) according to Claim 1, **characterized in that**, for the purpose of providing lateral guidance, furthermore at least one auxiliary mark (12, 17) for indicating the centre of the vehicle or the width of the vehicle is determined and displayed on the night vision image.

3. Night vision device (1) according to one of the preceding claims, **characterized in that** the at least one auxiliary mark (11, 12, 17) is determined from the angle and the last offset between the sensor axis of the night vision camera (2) and the longitudinal axis of the motor vehicle.

4. Night vision device (1) according to one of the preceding claims, **characterized in that** the control unit (4) is designed to calculate the current position of the vehicle on a traffic lane from the night vision image, and to compare it with a setpoint position for determining and displaying a correction vector (13).

5. Night vision device (1) according to one of the preceding claims, **characterized in that** the display unit (3) is designed to statically display vertical spacer auxiliary lines (14, 18) with permanently predefined distances from the motor vehicle toward the front in the direction of travel.

6. Night vision device (1) according to one of the preceding claims, **characterized in that** the control unit (4) is designed to determine and display a setpoint distance from a vehicle travelling in front, as a function of the driver's own speed.

7. Night vision device (1) according to Claim 6, **characterized in that** the control unit (4) is connected to surroundings sensors for determining parameters of the weather situation and/or of the state of the road and for determining the setpoint distance as a function of the parameters which are determined.

8. Night vision device (1) according to one of the preceding claims, **characterized in that** the control unit (4) is connected to a navigation device (5) and is designed to determine the auxiliary marks (11 to 18) as a function of parameters which are made available by the navigation device (5).

9. Night vision device (1) according to one of the preceding claims, **characterized in that** the control unit (4) is connected to an anti-collision device (6) and is designed to project into the two-dimensional night vision image at least one collision object which is prepared by the anti-collision device (6) in three-dimensional relative coordinates.

10. Night vision device (1) according to one of the preceding claims, **characterized in that** the control unit (4) is connected to a lane-keeping device (7).

11. Night vision device (1) according to one of the preceding claims, **characterized in that** the control unit (4) is connected to a navigation device (5) and is designed to include in the display a further road profile prepared by the navigation device (5).

## Revendications

1. Appareil de vision nocturne (1) pour des véhicules automobiles comprenant au moins une caméra de vision nocturne (2), une unité de commande (4) et une unité d'affichage (3) pour présenter une image de vision nocturne,
l'unité de commande étant réalisée pour déterminer et afficher des marquages d'assistance (11-18) pour le guidage longitudinal et/ou transversal lors de la conduite du véhicule,
**caractérisé en ce que**
l'appareil de vision nocturne est réalisé de façon à déterminer au moins un marquage d'assistance (11) de guidage transversal pour représenter les limites de la voie de circulation sur l'image de vision nocturne et les représenter en plus des marquages du bord de la chaussée apparaissant dans l'image de vision nocturne.

2. Appareil de vision nocturne (1) selon la revendication 1,
**caractérisé en ce que**
pour le guidage transversal, on détermine et on représente en outre au moins un marquage d'assistance (12, 17) pour représenter le milieu du véhicule ou de la largeur du véhicule sur l'image de la caméra de vision nocturne (2).

3. Appareil de vision nocturne (1) selon l'une des revendications précédentes,
**caractérisé en ce que**
la détermination d'au moins un marquage d'assistance (11, 12, 17) se fait à partir de l'angle et du dernier décalage entre l'axe de capteur de la caméra de vision nocturne (2) et l'axe longitudinal du véhicule automobile.

4. Appareil de vision nocturne (1) selon l'une des revendications précédentes,
**caractérisé en ce que**
l'unité de commande (4) est réalisée pour calculer la position actuelle du véhicule sur une voie de circulation à partir de l'image de vision nocturne et par comparaison à une position de consigne pour déterminer et afficher un vecteur de correction (13).

5. Appareil de vision nocturne (1) selon l'une des revendications précédentes,
**caractérisé en ce que**
l'unité d'affichage (3) est réalisée pour représenter de manière statique des lignes d'assistance, verticales, de distance (14, 18) à une distance fixe prédéfinie du véhicule, à l'avant, dans la direction de circulation.

6. Appareil de vision nocturne (1) selon l'une des revendications précédentes,
**caractérisé en ce que**
l'unité de commande (4) est réalisée pour déterminer et représenter une distance de consigne par rapport à un véhicule qui précède en fonction de la vitesse du propre véhicule.

7. Appareil de vision nocturne (1) selon la revendication 6,
**caractérisé en ce que**
l'unité de commande (4) comporte des capteurs de champ environnant pour déterminer les paramètres météorologiques et/ou l'état de la chaussée et pour déterminer la distance de consigne en fonction des paramètres déterminés.

8. Appareil de vision nocturne (1) selon l'une des revendications précédentes,
**caractérisé en ce que**
l'unité de commande (4) est reliée à un appareil de navigation (5) et elle est conçue pour déterminer les marquages d'assistance (11-18) en fonction de paramètres fournis par l'appareil de navigation (5).

9. Appareil de vision nocturne (1) selon l'une des revendications précédentes,
**caractérisé en ce que**
l'unité de commande (4) est reliée à un appareil anticollision (6) et elle est conçue pour projeter au moins un objet de collision fourni en coordonnées tridimensionnelles relatives par au moins un appareil anticollision (6), représenté dans l'image de vision nocturne en deux dimensions.

10. Appareil de vision nocturne (1) selon l'une des revendications précédentes,
**caractérisé en ce que**
l'unité de commande (4) est reliée à un appareil de maintien sur la voie (7).

11. Appareil de vision nocturne (1) selon l'une des revendications précédentes,
**caractérisé en ce que**
l'unité de commande (4) est reliée à un appareil de navigation (5) et elle est réalisée pour incruster un autre tracé de la chaussée fourni par l'appareil de navigation (5).
